Europäisches Patentamt

(19) European Patent Office

Office européen des brevets

(11) Veröffentlichungsnummer: **0 173 861**
**B1**

(12) **EUROPÄISCHE PATENTSCHRIFT**

(45) Veröffentlichungstag der Patentschrift:
**22.04.87**

(21) Anmeldenummer: **85109658.6**

(22) Anmeldetag: **01.08.85**

(51) Int. Cl.⁴: **B 60 T  8/18**

(54) **Elektrisch steuerbare Bremse für Fahrzeuge, insbesondere Schienenfahrzeuge.**

(30) Priorität: **06.09.84  DE 3432782**

(43) Veröffentlichungstag der Anmeldung:
**12.03.86 Patentblatt 86/11**

(45) Bekanntmachung des Hinweises auf die Patenterteilung:
**22.04.87 Patentblatt 87/17**

(84) Benannte Vertragsstaaten:
**CH DE FR GB LI SE**

(56) Entgegenhaltungen:
**EP - A - 0 032 435**
**EP - A - 0 037 757**
**EP - A - 0 106 014**
**EP - A - 0 110 203**
**DE - A - 3 216 407**
**DE - A - 3 235 358**
**DE - A - 3 332 351**

**PATENTS ABSTRACTS OF JAPAN, Band 8, Nr. 207
(M-327)[1644], 21. September 1984**

(73) Patentinhaber: **KNORR-BREMSE AG, Moosacher
Strasse 80 Postfach 401060, D-8000 München 40 (DE)**

(72) Erfinder: **Hommen, Winfried, Franziskanerstrasse 28,
D-8000 München 80 (DE)**
Erfinder: **Stäuble, Georg, Zittauer Strasse 20,
D-8000 München 50 (DE)**
Erfinder: **Wieser, Tiberius, Riesstrasse 82,
D-8000 München 50 (DE)**

ACTORUM AG

## Beschreibung

Die Erfindung betrifft eine elektrisch steuerbare Bremse für Fahrzeuge, insbesondere Schienenfahrzeuge, mit einer durch ein elektrisches Bremsanforderungssignal steuerbaren Steuervorrichtung zum Erstellen einer dem Bremsanforderungssignal entsprechenden Bremskraft, wobei die Steuervorrichtung eine in Notzuständen, insbesondere bei Stromausfall wirksame Notbremsvorrichtung zur Einsteuerung einer maximalen Bremskraft aufweisen kann, und mit einer von einem der Fahrzeugbelastung entsprechenden Fahrzeuglastsignal gesteuerten Begrenzungsvorrichtung zum fahrzeuglastabhängigen Begrenzen der Bremskraft, wobei das als elektrischer Sollwert anstehende Fahrzeuglastsignal über eine Steuerelektronik einen Stellmotor steuert, der seinerseits über ein Getriebe und einen diesem nachgeordneten Stellnocken die Axiallage einer Federabstützung für eine der als Druckbegrenzungsventil ausgebildeten Begrenzungsvorrichtung steuernde Regelfeder steuert.

Eine derartige Bremse, allerdings ohne Notbremsvorrichtung, ist aus der EP-A-32 435 für Kraftfahrzeuge bekannt. Mittels besonderer Schalter wird dabei während für die Erstellung des Fahrzeuglastsignals ungünstiger Fahrsituationen der Stellmotor abgeschaltet, so dass der Stellnocken seine augenblickliche Stellung beibehält. Zur Justierung ist ein analoges Rückführsignal vorgesehen, welches die jeweilige Stellnockenstellung der Steuerelektronik rückmeldet. Derartige analoge Steuerungen arbeiten ungenau und sind zudem für digitale Bremssteuerungen, wie sie für Schienenfahrzeuge neuerdings allgemein vorgesehen sind, unbrauchbar.

Aus der deutschen Patentanmeldung B 422 II/20f, der DE-A-25 46 470 und der DE-B-27 10 585 sind elektromechanische Bremsen für insbesondere Schienenfahrzeugen bekannt, bei welchen das Bremsanforderungssignal einem elektrischen Stellglied zugeführt wird, welches gegebenenfalls über ein Getriebe die Spannung bzw. die Entspannung eines Federspeichers steuert, dessen Kraft die mechanischen Reibungsbremsen zuzuführende Bremskraft bildet. Für derartige Bremsen ist mit der nicht vorveröffentlichten deutschen Patentschrift DE-A-34 23 509 bereits vorgeschlagen worden, für Notzustände eine Notbremsvorrichtung vorzusehen, welche bei Stromausfall das elektrische Stellglied vom Federspeicher entkuppelt, so dass der Federspeicher seine volle Kraft als Bremskraft abgeben kann. Da dies insbesondere bei unbeladenem Fahrzeug leicht zu Überbremsungen mit blockierenden Fahrzeugrädern führen kann, wird mit der Patentanmeldung weiterhin eine mechanische Begrenzungsvorrichtung für die abgebbare Bremskraft vorgeschlagen, welche mittels eines mechanischen Fahrzeuglastsignals, über einen Bowdenzug gesteuert, die Entspannung des Federspeichers und damit die Bremskraft begrenzt. Das Erstellen, Übertragen und Auswerten des mechanischen Fahrzeuglastsignals ist hierbei aufwendig, umständlich und zumeist relativ ungenau, wobei zu berücksichtigen ist, dass in den meisten, derartigen Bremsen das elektrische Bremsanforderungssignal bereits einen elektrischen Signalwert für die Fahrzeugbelastung beinhaltet. Es ist jedoch zu berücksichtigen, dass in Notfällen, insbesondere bei Stromausfall, das Bremsanforderungssignal mit seinem fahrzeuglastabhängigen, elektrischen Signalwert insgesamt ausfallen kann, wodurch es ohne die vorstehend erwähnte, mechanische Begrenzungsvorrichtung zu Bremsungen mit der maximal vom Federspeicher abgebbaren Bremskraft und damit zu den erwähnten Überbremsungen kommen kann.

Weiterhin sind elektrisch steuerbare Druckmittelbremsen bekannt, welche insbesondere auch als hydraulische Bremsen ausgebildet sein können, wobei die Steuervorrichtung in Abhängigkeit vom Bremsanforderungssignal einen Bremsdruck erstellt, der einen Bremszylinder beaufschlagt, und wobei die Begrenzungsvorrichtung als Druckbegrenzungsventil ausgebildet ist, das den von der Steuervorrichtung oder der Notbremsvorrichtung dem Bremszylinder zuzuführenden Bremsdruck fahrzeuglastabhängig begrenzt. Derartige Druckmittelbremsen sind beispielsweise aus den Druckschriften US-A- 3 730 597 und 3 920 285 und aus der DE-A-28 01 778.9 bekannt. Insbesondere die US-A-3 920 285 zeigt deutlich, dass ein von der Fahrzeugfederung abgegebenes, mechanisches Fahrzeuglastsignal, beispielsweise der Druck in Luftfederbälgen des Fahrzeuges, einerseits in einen elektrischen Signalwert umgewandelt wird, welcher zusammen mit dem Bremsanforderungssignal der Steuervorrichtung zur Erstellung des Bremsdruckes zugeführt wird, und dass andererseits aber zusätzlich ein Druckbegrenzungsventil vorgesehen werden muss, welches unmittelbar vom mechanischen Fahrzeuglastsignal angesteuert wird und insbesondere in Notfällen mit Ausfall des erwähnten, elektrischen Signalwertes oder bei Ausfall der gesamten Elektronik eine fahrzeuglastabhängige Begrenzung des Bremsdruckes zum Vermeiden von Überbremsungen bewirkt. Es ist selbstverständlich, dass auch Anordnungen beispielsweise gemäss der DE-A-28 40 262 mit derartigen Druckbegrenzungsventilen zur fahrzeuglastabhängigen Begrenzung des Bremsdruckes bei Ausfall der Elektrik ausrüstbar sind. Bei allen diesen Druckmittelbremsen muss ein mechanisches Fahrzeuglastsignal dem Druckbegrenzungsventil zugeführt werden, die Erstellung und Zuführung dieses zudem mitunter ungenauen, mechanischen Fahrzeuglastsignals ist, wie bereits erwähnt, aufwendig und teuer, zumal in den Druckmittelbremsen zusätzlich ein elektrischer fahrzeuglastabhängiger Signalwert bereits verarbeitet wird.

Aus der GB-A-496 208 und der US-E-28 538 (Wiederausgabe von US-A-3 547 499) ist es für andersartige Druckmittelbremsen bekannt, allein ein elektrisches Fahrzeuglastsignal zu erstellen und in der Druckmittelbremsanlage zum Bilden des Bremsdruckes auszuwerten. Bei Stromausfall und hierbei aus Sicherheitsgründen auszulösender Notbremsung geht jedoch dieses elektrische

2

Fahrzeuglastsignal verloren, wodurch die bereits erwähnten Überbremsungen verursacht werden können.

Es ist Aufgabe der Erfindung, eine Bremse gemäss dem Gattungsbegriff des Patentanspruches 1 in einfacher Weise derart auszugestalten, dass die Mängel der bekannten Anordnungen vermieden werden, insbesondere auch digitale Bremssteuerungen verwendbar sind und der Steuerelektronik genaue Justiersignale für die Stellnockeneinstellung zuführbar sind.

Diese Aufgabe wird nach der Erfindung dadurch gelöst, dass der Stellnocken eine Signaleinrichtung steuert, welche in einer vorbestimmten Stellnockeneinstellung, gegebenenfalls einer Stellnocken-Endeinstellung, der Steuerelektronik ein Justiersignal zuführt.

Die abhängigen Ansprüche geben vorteilhafte Ausbildungsmöglichkeiten für den vorstehend genannten Merkmalen entsprechende bremsen an.

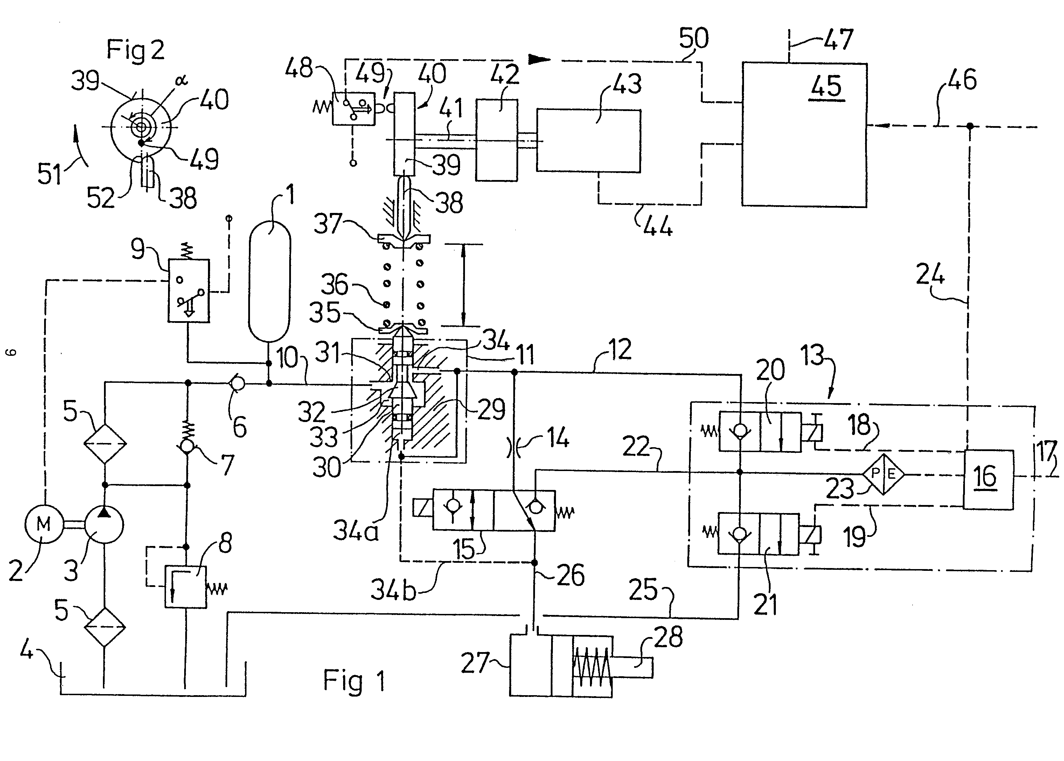

In der Zeichnung Fig. 1 ist eine nach der Erfindung ausgebildete, hydraulische Druckmittelbremse schematisch dargestellt. Die Fig. 2 zeigt eine Einzelheit aus der Fig. 1.

Gemäss Fig. 1 treibt zum Aufladen eines hydraulischen Druckspeichers 1 ein Motor 2 eine Pumpe 3 an, welche aus einem Hydraulikspeicher 4 über vor- und nachgeschaltete Filter 5 und ein Rückschlagventil 6 Hydraulikmedium in den Druckspeicher 1 fördert. Aus Sicherheitsgründen ist das der Pumpe 3 nachgeordnete Filter 5 durch ein Rückschlagventil 7 überbrückt; ein Überdruckventil 8 verbindet die Druckseite der Pumpe 3 mit dem Hydraulikspeicher 4. An den als Druckmittelquelle dienenden Druckspeicher 1 ist ein Druckwächter 9 zum Ein- bzw. Ausschalten des Motors 2 angeschlossen. Der Druckspeicher 1 steht über eine Leitung 10 mit dem Eingang eines später zu beschreibenden Druckbegrenzungsventils 11 in Verbindung, von dessen Ausgang eine Leitung 12 zu einer Steuervorrichtung 13 und über eine Düse 14 zu einem Notbremsventil 15 führt. Die Steuervorrichtung 13 beinhaltet eine Elektronik 16, welcher über ein Kabel 17 ein elektrisches Bremsanforderungssignal zugeführt wird und welche über elektrische Verbindungen 18 und 19 ein Einlassmagnetventil 20 und ein Auslassmagnetventil 21 zum Erstellen eines durch eine Leitung 22 abzuführenden Bremsdruckes steuert. Zur Rückführung des Bremsdruck-Istwertes ist innerhalb der Steuervorrichtung 13 ein Druck-Spannungsumsetzer 23 vorgesehen, der einerseits an die Leitung 22 und andererseits an die Elektronik 16 angeschlossen ist. Weiterhin kann ein Kabel 24 vorgesehen sein, durch welches der Elektronik 16 ein elektrisches Fahrzeuglastsignal zugeführt werden kann; das Kabel 24 mit der Zuführung des elektrischen Fahrzeuglastsignals kann jedoch bei Verzicht einer fahrzeuglastabhängigen Beeinflussung der Steuervorrichtung 13 entfallen. Das Einlassmagnetventil 20 ist zwischen die Leitungen 12 und 22 und das Auslassmagnetventil 21 ist zwischen die Leitung 22 und eine zum Hydraulikspeicher 4 zurückführende Leitung 25 eingeordnet. Die Steuervorrichtung 13 ist damit ähnlich den aus der erwähnten DE-A-28 40 262 bekannten, allerdings für pneumatische Bremsen vorgesehenen Vorrichtungen ausgebildet und arbeitet auch entsprechend: Das im Kabel 17 anstehende Bremsanforderungssignal veranlasst die Elektronik 16 das Einlassmagnetventil 20 und das Auslassmagnetventil 21 derart anzusteuern, dass in die Leitung 22 ein dem elektrischen Bremsanforderungssignal entsprechender Bremsdruck ansteht, wobei der Ist-Wert dieses Bremsdruckes über den Druck-Spannungsumsetzer 23 der Elektronik 16 zurückgemeldet wird. Bei vorhandenem Kabel 24 kann dabei der in der Leitung 22 anstehende Bremsdruck zusätzlich fahrzeuglastabhängig gesteuert sein; diese Steuerung ist jedoch nicht unbedingt erforderlich, sie kann auch vom Druckbegrenzungsventil 11 übernommen werden. Die Elektronik 16 kann entsprechend der bereits erwähnten DE-A-28 40 262.2 oder auch entsprechend den Druckschriften US-A-3 920 285 oder US-E-28 538 ausgebildet sein.

Vom Notbremsventil 15 führt eine Leitung 26 zu einem Bremszylinder 27, von dessen Kolbenstange 28 die den nicht dargestellten Reibungsbremsen zuzuführende Bremskraft abnehmbar ist. Das Notbremsventil 15 sperrt im dargestellten, unerregten Zustand die an es angeschlossene Leitung 22 von der Leitung 26 ab und verbindet die Leitungen 12 und 26 über die Düse 14 miteinander; im erregten Zustand trennt es dagegen die Verbindung zwischen den Leitungen 12 und 26 auf und verbindet die Leitungen 22 und 26 miteinander. In den nicht dargestellten Erregungsstromkreis für das Notbremsventil 15 können die üblichen Sicherungsschalter eingeordnet sein, welche diesen Stromkreis bei Ausfall des Fahrzeugführers, bei willkürlicher Betätigung durch einen Fahrgast, bei Störungen in der elektrischen Fahrzeugausrüstung, insbesondere der Steuervorrichtung 13 mit der Elektronik 16, bei Überfahren eines auf «Halt» stehenden Signals, bei Druckabfall im druckspeicher 1 und/oder in anderen Notsituationen unterbrechen.

Das Druckbegrenzungsventil 11 weist einen in einem Gehäuse 29 axial verschieblich geführten Ventilschieber 30 auf, welcher mittels einer auf einer Gehäusekante 31 aufsetzbaren Dichtfläche 32 ein Absperrventil 31, 32 bildet und je nach seiner axialen Lage die Verbindung zweier mit der Leitung 10 bzw. der Leitung 12 in Verbindung stehender Räume 33 bzw. 34 öffnet oder unterbricht. Die eine Stirnfläche des Ventilschiebers 30 ist über einen Raum 34a mit dem im Raum 34 herrschenden Druckmitteldruck beaufschlagt, wobei diese Beaufschlagung in Aufsetzrichtung der Dichtfläche 32 auf die Gehäusekante 31 und damit Trennung der Räume 33 und 34 wirkt. Der Raum 34a kann abweichend auch vom Raum 34 abgetrennt und mittels einer gestrichelt dargestellten Leitung 34b an die Leitung 26 angeschlossen sein. Das andere Ende des Ventilschiebers 30 trägt über eine Spitzenlagerung einen Federteller 35, auf welchem eine Regelfeder 36 aufsitzt. Das dem Ventilschieber 30 abgewandte Ende der Regelfeder 36 liegt an einem Federteller 37 an, der über eine Spitzenlagerung gegen einen axial verschieblich gelagerten, zur Regelfeder 36 gleichachsigen Stössel 38 abgestützt ist. Das der Regelfeder 36 abgewandte Ende des Stössels 38 liegt an der als Nockenfläche 39 ausgebildeten Umfangsfläche eines drehnockens 40 an. Der Drehnocken 40 ist drehfest mit einer Welle 41 verbunden, welche über ein Getriebe 42 von einem elektrischen Stellmotor 43 antreibbar ist. Die elektrische Betätigung des Stellmotors 43 wird über ein Kabel 44 von einer Elektronik 45 gesteuert, welcher vermittels eines Kabels 46 das bereits erwähnte, elektrische Fahrzeuglastsignal und über ein weiteres Kabel 47 ein einen Fahrtbeginn anzeigendes Signal, beispielsweise das Schliessen der Fahrzeugtüren, zugeführt wird. Das Kabel 24 ist, wenn vorhanden, zweckmässig mit dem Kabel 46 verbunden. Nahe des Drehnockens 40 ist ein elektrischer Schalter 48 vorgesehen, welcher über eine Nockeneinrichtung 49 in einer bestimmten Drehlage des Drehnockens 40 über ein Kabel 50 ein elektrisches Signal an die Elektronik 45 abgibt. Der Drehnocken 40 ist in Fig. 2 in Ansicht dargestellt. Man erkennt, dass die Nockenfläche 39 eine in Drehrichtung des Pfeiles 51 für den Nocken ansteigende, etwa spiralig ausgebildete Fläche ist, welche über eine relativ steile Stufe 52 in sich zurückgeführt ist. Der Schalter 48 mit der Nockeneinrichtung 49 ist derart angeordnet, dass unmittelbar nach Abgleiten des Stössels 38 an der stufe 52, in der in Fig. 2 dargestellten Lage, der «Nullage», der Schalter 48 den elektrischen Impuls der Elektronik 50 zuführt. Die Teile 38 bis 45 bilden einen Signalwertumsetzer 38 bis 45, der Elektrikteile 45, 43 beinhaltet und der vermittels eines aus dem Drehnocken 40 und dem Stössel 38 gebildeten Stellnockens 38, 40 die Vorspannung der Regelfeder 36 steuert:

Ausgehend von einer beliebigen Drehstellung des Drehnockens 40 und stehendem Fahrzeug sowie im Kabel 46 und gegebenenfalls Kabel 24 anstehendem, elektrischen Fahrzeuglastsignal erhält die Elektronik 45 bei Fahrtbeginn, beispielsweise dem Schliessen der Fahrzeugtüren, durch das Kabel 47 ein Signal, welches die Elektronik 45 veranlasst, durch das Kabel 44 den Stellmotor 43 in Gang zu setzen. Der Stellmotor 43 treibt durch das Getriebe 42 untersetzt die Welle 41 und damit den Drehnocken 40 an, wobei der Stössel 38 auf der Nockenfläche 39 gleitet. Sobald der Stössel 38 über die Stufe 52 abgleitet, also die in Fig. 2 dargestellte Drehstellung («Nullage») des Drehnockens 40 erreicht ist, schliesst kurzzeitig der Schalter 48 und gibt durch das Kabel 50 ein die augenblickliche Drehstellung an die Elektronik 45 signalisierendes Signal ab. Ausgehend von dieser Drehstellung erregt die Elektronik 45 durch das Kabel 44 den Stellmotor 43 in einem dem im Kabel 46 anstehenden, elektrischen Fahrzeuglastsignal entsprechenden Masse, derart, dass der Stellmotor 43 über das Getriebe 42 den Drehnocken 40 um einen bestimmten, dem Fahrzeuglastsignal entsprechenden Drehwinkel weiterdreht und dann stillsetzt. Der Stössel 38 gelangt dabei an eine ganz bestimmte Stelle der Nockenfläche 39 und wird in eine entsprechende, axiale Lage eingestellt, wodurch über den Federteller 37 die Regelfeder 36 eine ganz bestimmte, in Abhängigkeit zum im Kabel 46 anstehenden, elektrischen Fahrzeuglastsignal stehende Vorspannung erhält.

Die Steigung der Nockenfläche 39 ist derart gering, dass nach Abschalten des Stellmotors 43 der durch die Regelfeder 36 an die Nockenfläche 39 angedrückte Stössel 38 keine Drehung des Drehnockens 40 bewirken kann, die erreichte Drehstellung des Drehnockens 40 bleibt vielmehr nach Abschalten des Stellmotors 43 konstant erhalten. Infolge der einerseitigen Belastung durch die Vorspannung der Regelfeder 36 und die anderseitige Belastung durch den im Raum 34 und damit der Leitung 12 herrschenden Druckmitteldruck steuert das Druckbegrenzungsventil 11 aus der Leitung 10 in die Leitung 12 eine bestimmte, in Abhängigkeit von der Vorspannung der Regelfeder 36 und damit dem im Kabel 46 anstehenden Fahrzeuglastsignal stehende Druckhöhe ein: Bei Unterschreiten dieser bestimmten Druckhöhe hält die Regelfeder 36 die Dichtfläche 32 von der Gehäusekante 31 abgehoben, bei Erreichen der bestimmten Regeldruckhöhe wird der Ventilschieber 30 unter seiner Druckmittelbeaufschlagung durch den Raum 31 entgegen der Kraft der Feder 36 bis zum Aufsetzen der Dichtfläche 32 auf die Gehäusekante 31 verschoben, wodurch die Druckmittelnachspeisung in die Leitung 12 abgesperrt wird; sollte in der Leitung 12 infolge Fahrzeugentlastung ein zu hoher Druck anstehen, so wird dieser bei einer nachfolgenden Bremsung sofort auf den richtigen Druckwert abgebaut. Abweichend hierzu kann das Druckbegrenzungsventil 11 in nicht dargestellter Weise mit einem Auslassventilteil zum Abbau von Überdrücken in der Leitung 12 versehen werden. In die Leitung 12 wird somit eine bestimmte, in Abhängigkeit vom Fahrzeuglastsignal stehende Druckhöhe eingespeist. Diese Druckhöhe bleibt infolge der erwähnten Selbsthemmung des Stellnockens 38, 40 auch bei Ausfall des im Kabel 46 anstehenden Fahrzeuglastsignals und/oder der Elektrikteile 43, 45, beispielsweise bei Stromausfall, erhalten.

Im erregten Zustand des Notbremsventils 15 verbindet dieses den Bremszylinder 27 durch die Leitungen 26 und 22 und das im Bremsenlösezustand geöffnete Auslassmagnetventil 21 mit dem Hydraulikspeicher 4, so dass der Bremszylinder 27 drucklos ist und keine Bremskraft abgibt. Wird nunmehr durch ein entsprechendes Bremsanforderungssignal im Kabel 17 eine Bremsung eingeleitet, so erregt die Elektronik 16 das Einlassmagnetventil 20 und das Auslassmagnetventil 21 derart, dass letzteres schliesst und ersteres aus der Leitung 12 in die Leitung 22 und damit den Bremszylinder 27 einen Bremsdruck einsteuert. Sobald dieser Bremsdruck eine bestimmte, dem anstehenden Bremsanforderungssignal entsprechende Druckhöhe erreicht, was über den Druck-Spannungsumsetzer 23 der Elektronik 16 rückgemeldet wird, schliesst diese auch das Einlassmagnetventil 20, so dass der erreichte Bremsdruck konstant aufrechterhalten bleibt. Die Elektronik 16 kann dabei, wie bereits erwähnt, den in die Leitung 22 einzusteuernden Bremsdruck in Abhängigkeit vom durch das Kabel 24 zugeführten Fahrzeuglastsignal modifizieren, was insbesondere bei Teilbremsungen vorteilhaft ist. Bei Vollbremsungen wird der in die Leitung 22 einzusteuernde Bremsdruck bereits durch das Druckbegrenzungsventil 11 begrenzt, welches in die Leitung 12 nur einen der jeweiligen Fahrzeugbelastung entsprechend begrenzten Druck einspeist. Zum nachfolgenden Bremsenlösen wird vermittels des Bremsanforderungssignals die Elektronik 16 veranlasst, unter Geschlossenhalten des Einlassmagnetventils 20 das Auslassmagnetventil 21 zu öffnen, so dass der im Bremszylinder 27 anstehende Bremsdruck in den Hydraulikspeicher 4 abgebaut wird.

Fällt die Erregung des Notbremsventils 15 bei gelösten oder betätigten Fahrzeugbremsen aus, was insbesondere durch Öffnen eines der vorstehend bereits erwähnten, in seinen Erregungsstromkreis eingeordneten Schalters erfolgen kann, so wird der volle, lastabhängig begrenzte Druck aus der Leitung 12 unter Abtrennung der Leitung 22 in die Leitung 26 und den Bremszylinder 27 eingespeist, wobei die Düse 14 die Druckanstiegsgeschwindigkeit zum Vermeiden übermässig harter Einbremsstösse am Fahrzeug begrenzt. Das Druckbegrenzungsventil 11 stellt auch hierbei sicher, dass der Bremszylinder 27 nur mit einem entsprechend der jeweiligen Fahrzeugbelastung begrenzten Druck beaufschlagbar ist, so dass eine Überbremsung des Fahrzeuges ausgeschlossen wird. Bei Wiedererregen des Notbremsventils 15 schaltet dieses zurück, wodurch der Bremszylinder 27 teilweise oder vollständig, je nach im Kabel 17 anstehendem Bremsanforderungssignal, entleert wird.

In Abänderung zum vorstehend beschriebenen Ausführungsbeispiel ist es auch möglich, das Notbremsventil 15 mit der Düse 14 wegzulassen und die Leitung 22 ständig mit der Leitung 26 zu verbinden. Die Elektronik 16 ist dabei derart auszubilden, dass bei Stromausfall oder sonstiger Störung bzw. Einsteuern einer Notbremsung das Einlassmagnetventil 20 ständig geöffnet und das Magnetventil 21 ständig geschlossen gehalten wird.

Der Schalter 48 kann abweichend zum Ausführungsbeispiel auch so angeordnet werden, dass er unmittelbar von der Hubstellung des Stössels 38, nicht der Drehstellung des Drehnockens 40, betätigbar ist.

Die vorstehend erwähnten Ausführungsformen sind selbstverständlich auch für Druckluftbremsen geeignet.

*Bezugszeichenliste*

1   Druckspeicher
2   Motor
3   Pumpe
4   Hydraulikspeicher
5   Filter
6   Rückschlagventil
7   Rückschlagventil
8   Überdruckventil
9   Druckwächter
10   Leitung
11   Druckbegrenzungsventil
12   Leitung
13   Steuervorrichtung
14   Düse
15   Notbremsventil
16   Elektronik
17   Kabel
18   Verbindung
19   Verbindung
20   Einlassmagnetventil
21   Auslassmagnetventil
22   Leitung
23   Druck-Spannungsumsetzer
24   Kabel
25   Leitung
26   Leitung
27   Bremszylinder
28   Kolbenstange
29   Gehäuse
30   Ventilschieber
31   Gehäusekante
32   Dichtfläche
31,32   Absperrventil
32   Absperrventil
33   Raum
34   Raum
34a   Raum
34b   Leitung
35   Federteller
36   Regelfeder
37   Federteller
38   Stössel
39   Nockenfläche
40   Drehnocken
38,40   Stellnocken
41   Welle
42   Getriebe
43   Stellmotor
44   Kabel
45   Elektronik
38 bis 45   Signalwertumsetzer
43, 45   Elektrikteile
45   Elektrikteile
46   Kabel
47   Kabel
48   Schalter
49   Nockeneinrichtung
50   Kabel
51   Pfeil
52   Stufe

## Patentansprüche

1. Elektrisch steuerbare Bremse für Fahrzeuge, insbesondere Schienenfahrzeuge, mit einer durch ein elektrisches Bremsanforderungssignal steuerbaren Steuervorrichtung (13) zum Erstellen einer dem Bremsanforderungssignal entsprechenden Bremskraft, wobei die Steuervorrichtung eine in Notzuständen, insbesondere bei Stromausfall wirksame Notbremsvorrichtung (15) zur Einsteuerung einer maximalen Bremskraft aufweisen kann, und mit einer von einem der Fahrzeugbelastung entsprechenden Fahrzeuglastsignal gesteuerten Begrenzungsvorrichtung (11) zum Fahrzeuglastabhängigen Begrenzen der Bremskraft, wobei das als elektrischer Signalwert anstehende Fahrzeuglastsignal über eine Steuerelektronik (45) einen Stellmotor (43) steuert, der seinerseits über ein Getriebe (42) und einen diesem nachgeordneten Stellnocken (38, 40) die Axiallage einer Federabstützung (37) für eine der als Druckbegrenzungsventil (11) ausgebildeten Begrenzungsvorrichtung steuernde Regelfeder (36) steuert, dadurch gekennzeichnet, dass der Stellnocken (38, 40) eine Signaleinrichtung (Schalter 48) steuert, welche in einer vorbestimmten Stellnockeneinstellung, gegebenenfalls einer Stellnokken-Endstellung, der Steuerelektronik (45) ein Justiersignal zuführt.

2. Bremse nach Anspruch 1, dadurch gekennzeichnet, dass die Steuerelektronik (45) zu Fahrtbeginn, gegebenenfalls in Abhängigkeit vom Türschliessen, ein Startsignal erhält, hierdurch veranlasst vermittels des Stellmotors (43) den Stellnocken (38, 40) bis zum Erreichen der vorbestimmten Stellnockeneinstellung verstellt und anschliessend den Stellnocken (38, 40) in Abhängigkeit vom anstehenden Fahrzeuglastsignal in eine diesem entsprechende Lage einstellt.

3. Bremse nach Anspruch 2, dadurch gekennzeichnet, dass die Steuerelektronik (45) nach Erreichen einer dem anstehenden Fahrzeuglastsignal entsprechenden Einstellung des Stellnockens (38, 40) zumindest den Stellmotor (43), gegebenenfalls sich selbst, bis zum Erhalt des nächsten Startsignals abschaltet.

## Claims

1. Electrically controlled brake for vehicles, in particular rail vehicles, having a control device (13) controlled by an electrical brake command signal for producing a braking force corresponding to the brake command signal, wherein the control device can have an emergency brake device (15) effective in emergency conditions, in particular during power failure, for controlling a maximum braking force, and having a limiting device (11) controlled by a vehicle load signal corresponding to the vehicle load, for limiting the braking force in dependence upon the vehicle load, wherein the vehicle load signal occurring as an electrical signal value controls a servomotor (43) by means of an electronics control unit (45), and the motor in turn controls, by means of gears (42) and an adjusting cam (38, 40) subordinate thereto, the axial position of a spring support (37) for one of the regulating springs (36) controlling the limiting device which is constructed as a pressure limiting valve (11), characterised in that the adjusting cam (38, 40) controls a signalling device (switch 48) which supplies an adjusting signal to the electronics control unit (45) in a predetermined setting of the adjusting cam, if necessary an adjusting cam final position.

2. Brake according to claim 1, characterised in that the electronics control unit (45) receives a starting signal at the beginning of the journey, if necessary dependent on the closure of doors, through this causes the adjustment of the adjusting cam (38, 40) by means of the servo motor (43) until the predetermined adjusting cam setting has been achieved, and then adjusts the adjusting cam (38, 40) into a position dependent on the occurring vehicle load signal.

3. Brake according to claim 2, characterised in that after reaching a setting of the adjusting cam (38, 40) corresponding to the occurring vehicle load signal, the electronics control unit (45) switches off at least the servo motor (43), if necessary itself, until the next starting signal has been received.

## Revendications

1. Frein à commande électrique pour des véhicules, en particulier pour des véhicules sur rails, avec un dispositif de commande (13), susceptible d'être contrôlé par un signal électrique de demande de freinage, pour établir une force de freinage qui correspond au signal de demande de freinage, ledit dispositif de commande pouvant comporter, pour régler une force de freinage maximale, un dispositif de freinage d'urgence (15) agissant en cas d'urgence, en particulier dans le cas d'une défaillance du courant, et avec un dispositif de limitation (11), commandé par un signal de charge du véhicule qui correspond à la charge de ce dernier, pour limiter, en fonction de la charge du véhicule, la force de freinage, le signal de charge du véhicule qui est présent sous la forme d'une valeur de signal électrique, contrôlant, par l'intermédiaire d'une électronique de commande (45), un servomoteur (43) qui à son tour contrôle, par l'intermédiaire d'une transmission (42) et une came de réglage (38, 40) prévue en aval de cette dernière, la position axiale d'un plateau de ressort (37) pour un ressort de réglage (36) qui contrôle un dispositif de limitation réalisé sous la forme d'une soupape de limitation de la pression (11), caractérisé par le fait que la came de réglage (38, 40) commande un dispositif de signaux (interrupteur 48) qui, pour un réglage prédéterminé de la came de réglage, éventuellement pour une position d'extrémité de la came de régalge, applique un signal d'ajustement à l'électronique de commande (45).

2. Frein selon la revendication 1, caractérisé par le fait que l'électronique de commande (45) reçoit, au commencement du roulement, éventuellement en fonction de la fermeture des portières, un signal de démarrage, provoque de ce fait, et à l'aide du servomoteur (43), le déplacement de la came de (38, 40) jusqu'à ce que soit atteint le réglage prédéterminé de la came, et règle ensuite la came de réglage (38, 40), en fonction du signal de charge du véhicule, dans une position qui correspond à ce dernier signal.

3. Frein selon la revendication 2, caractérisé par le fait que l'électronique de commande (45) débranche, après que soit atteint le réglage de la came de réglage (38, 40), qui correspond au signal de charge du véhicule, au moins le servomoteur (43), éventuellement elle-même, jusqu'à réception du signal de démarrage suivant.

Fig 2

Fig 1

0 173 861

6